(19) Europäisches Patentamt
European Patent Office
Office européen des brevets

(11) **EP 2 109 227 A1**

(12) **EUROPEAN PATENT APPLICATION**
published in accordance with Art. 153(4) EPC

(43) Date of publication:
**14.10.2009 Bulletin 2009/42**

(51) Int Cl.:
***H04B 7/005*** (2006.01)

(21) Application number: **08700024.6**

(22) Date of filing: **11.01.2008**

(86) International application number:
**PCT/CN2008/000083**

(87) International publication number:
**WO 2008/106857 (12.09.2008 Gazette 2008/37)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **06.03.2007 CN 200710005625**

(71) Applicant: **Huawei Technologies Co., Ltd.**
**Longgang District**
**Shenzhen**
**Guangdong 518219 (CN)**

(72) Inventors:
• **JIANG, Yong**
  **Guangdong 518129 (CN)**
• **WANG, Yi**
  **Guangdong 518129 (CN)**

(74) Representative: **Kreuz, Georg Maria**
**Huawei Technologies**
**Riesstrasse 25**
**80992 München (DE)**

(54) **METHOD, DEVICE FOR REDUCING SIGNAL PEAK VALUE AND TRANSMITTING DEVICE**

(57)     A method and a device for reducing a signal peak value are adapted to solve a problem that overall performance of a system is significantly degraded caused by allocating a same weight to each sub-carrier so as to averagely distribute a peak clipping noise to each sub-carrier. The method includes: receiving a signal (21); and performing a peak clipping processing on the received signal by using a peak clipping signal (25). The peak clipping signal is formed according to a peak clipping weight factor and the received signal, or according to a frequency domain error vector magnitude (EVM) and the received signal. In the method, a weight of each sub-carrier is set according to the peak clipping weight factor (the peak clipping weight factor includes, but is not limited to, an encoding mode, a constellation mapping mode, a transmit power, and a receiving quality class) or the frequency domain EVM during the peak clipping processing, that is, a large weight is allocated to the sub-carrier having good anti-interference capability, and a small weight is allocated to the sub-carrier having poor anti-interference capability, thereby improving the overall performance of the system.

Receive a signal — 21

Generate a middle peak clipping signal according to a peak clipping weight factor or a frequency domain EVM — 22

Detect peak point positions and amplitude phases of the received signal — 23

Generate a peak clipping signal according to the peak point positions, the amplitude phases, and the middle peak clipping signal — 24

Perform a peak clipping processing on the received signal by using the peak clipping signal — 25

Detect an amplitude of the processed signal — 26

Determine whether the amplitude is smaller than a threshold or whether a umber of peak clippings reaches a predetermined number — 27 (False / True)

End — 28

FIG. 2

**Description**

**FIELD OF THE TECHNOLOGY**

The present invention relates to a field of wireless communication technology, and more particularly to a method and a device for reducing a signal peak value, and a transmitting device.

**BACKGROUND OF THE INVENTION**

The orthogonal frequency division multiplexing (OFDM) technology is an effective broadband transmission technology, which is widely applied in many fields such as digital audio broadcast (DAB), digital video broadcast (DVB), and high definition television (HDTV). However, in a system employing the OFDM technology, a high peak power of a signal results in a high ratio of the peak power to an average power (that is, peak-to-average power ratio, PAPR) of the signal, which requires a power amplifier of a system transmitter to be highly linear to avoid non-linear distortion when amplifying the signal. As a result, the difficulty and cost for implementing the system are increased, and the further development and application of the OFDM technology are restricted.

In order to reduce the peak power of the signal in the OFDM communication system, many technologies for reducing the peak power such as peak clipping and amplitude limiting technology and peak canceling technology are developed. The peak clipping and amplitude limiting solution is easier to implement, but causes in-band distortion and out-of-band power radiation of the signal. The peak canceling technology can be regarded as an improved peak clipping and amplitude limiting technology that does not cause out-of-band power radiation but still results in in-band signal distortion. The peak canceling technical solution will be described in the following. In the peak canceling technical solution, a waveform approximate to an ideal pulse (the waveform is also referred to as Kernel) in a time domain needs to be pre-stored. Since frequency components of the waveform only fall on data sub-carriers, that is, no interference is caused to null sub-carriers which is for frequency spectrum protection, out-of-band power radiation does not occur.

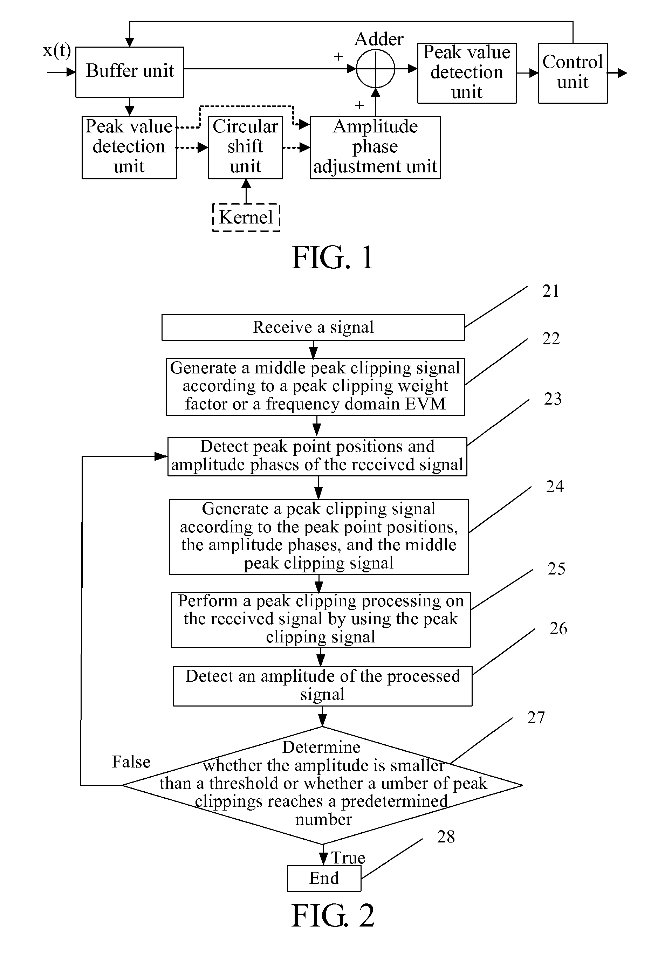

FIG. 1 shows a peak canceling device including a buffer unit which is adapted to buffer an input signal x(t), a peak value detection unit which is adapted to detect peak point positions and amplitude phases of the signal, and transfer detection results to the circular shift unit and the amplitude phase adjustment unit, a circular shift unit which is adapted to perform a circular shift on a Kernel waveform according to the peak point positions detected by the peak value detection unit, an amplitude phase adjustment unit which is adapted to perform an amplitude adjustment and a phase rotation on the circularly shifted Kernel waveform according to the amplitude phases detected by the peak value detection unit, an adder which is adapted to add Kernel signals corresponding to the peak points that are processed by the amplitude phase adjustment unit and the signal (buffered) which is before the current peak clipping, another peak value detection unit which is adapted to detect peak values of the signal processed by the adder, and a control unit which is adapted to: determine whether the peak values, for example, the maximum peak value, detected by the peak value detection unit are lower than a threshold value; and if they are lower than the threshold value, directly output the adjusted signal x(t); otherwise, transfer the adjusted signal x(t) to the buffer unit for the next peak clipping.

The peak canceling method is introduced below briefly. First, an input signal x(t) is buffered. Then, the peak value detection unit detects a peak point position and an amplitude phase of the signal, and transfers detection results to the circular shift unit. The circular shift unit performs a circular shift on a Kernel waveform by using the peak point positions detected by the peak value detection unit. Afterwards, the amplitude phase adjustment unit performs an amplitude adjustment and a phase rotation on the circularly shifted Kernel waveform according to the amplitude phases detected by the peak value detection unit. The adder adds Kernel signals corresponding to the peak points that are processed by the amplitude phase adjustment unit and the signal (buffered) which is before the current peak clipping. Then peak values of the signal processed by the adder are detected. The control unit determines whether the peak values are lower than a threshold value, and if they are lower than the threshold value, the control unit directly outputs the adjusted signal x(t); otherwise, the control unit transfers the adjusted signal x(t) to the buffer unit for the next peak clipping.

However, in the current communication standards related to the OFDM, an adaptive modulation encoding mode is adopted in order to utilize spectrum resources more effectively, with the result that data on different sub-carriers in the same symbol uses different modulation encoding modes, and data on the same sub-carrier among different symbols also uses different modulation encoding modes. The different modulation encoding modes employed by the sub-carriers cause different anti-interference capabilities of the sub-carriers. However, in the existing technical solution, the same weight is allocated to different sub-carriers so as to averagely distribute the peak clipping noise to each sub-carrier without considering the difference in anti-interference capabilities of the sub-carriers. In this way, when the sub-carrier having a poor anti-interference capability bears a large peak clipping noise, the overall performance of the system is significantly degraded.

## SUMMARY OF THE INVENTION

According to the present invention a method and a device for reducing a signal peak value, and a transmitting device are provided for solving the problem that the overall performance of a system is significantly degraded by allocating a same weight to different sub-carriers so as to averagely distribute a peak clipping noise to each sub-carrier.

As a first aspect the present invention provides a method for reducing a signal peak value. The method includes the following steps.

A signal is received.

A peak clipping processing is performed on the received signal by using a peak clipping signal. The peak clipping signal is formed according to a peak clipping weight factor and the received signal or according to a frequency domain error vector magnitude (EVM) and the received signal.

As a second aspect the present invention further provides a device for reducing a signal peak value. The device includes a receiving unit, a peak clipping signal generating unit, and a peak clipping processing unit.

The receiving unit includes a first receiving module adapted to receive an upper level signal and output the received signal to the peak clipping signal generating unit and the peak clipping processing unit.

The peak clipping signal generating unit is adapted to generate a peak clipping signal according to a peak clipping weight factor and the signal received by the receiving unit or according to a frequency domain EVM and the received signal.

The peak clipping processing unit includes a processing module adapted to perform a peak value reduction processing on the received signal according to the peak clipping signal.

As a third aspect the present invention further provides a transmitting device. The transmitting device includes an encoding unit, a constellation mapping unit, and a modulation unit.

The encoding unit is adapted to encode data to be transmitted.

The constellation mapping unit is adapted to perform a constellation mapping on the data encoded by the encoding unit.

The modulation unit is adapted to modulate the data of the constellation mapping unit to a corresponding sub-carrier.

The transmitting device further includes a device for reducing a peak value. The device for reducing a signal peak value includes a peak clipping signal generating unit and a peak clipping processing unit.

The peak clipping signal generating unit is adapted to generate a peak clipping signal according to a peak clipping weight factor or a frequency domain EVM.

The peak clipping processing unit is adapted to perform a peak value reduction processing on the received signal according to the peak clipping signal.

In the implementation forms of the present invention, a weight of each sub-carrier is set according to a peak clipping weight factor (the peak clipping weight factor includes, but is not limited to, an encoding mode, a constellation mapping mode, a transmit power, and a receiving quality class) or a frequency domain EVM during the peak clipping processing, that is, a large weight is allocated to the sub-carrier having good anti-interference capability and a small weight is allocated to the sub-carrier having poor anti-interference capability, thereby improving the overall performance of a system.

## BRIEF DESCRIPTION OF THE DRAWINGS

FIG. 1 shows a peak canceling device in the prior art;

FIG. 2 is a flow chart of reducing a signal peak value according to a first embodiment of the present invention;

FIG. 3 is a flow chart of a first approach to generate a middle peak clipping signal according to a peak clipping weight factor according to the first embodiment of the present invention;

FIG. 4 is a flow chart of a second approach to generate a middle peak clipping signal according to a peak clipping weight factor according to the first embodiment of the present invention;

FIG. 5 is a flow chart of reducing a signal peak value according to a second embodiment of the present invention;

FIG. 6 shows a device for reducing a signal peak value according to a third embodiment of the present invention;

FIG. 7 shows a device for reducing a signal peak value corresponding to the first approach to generate the middle peak clipping signal according to the third embodiment of the present invention;

FIG. 8 shows a device for reducing a signal peak value corresponding to the second approach to generate the middle peak clipping signal according to the third embodiment of the present invention;

FIG. 9 shows a device for reducing a signal peak value corresponding to the process for reducing a signal peak value in the second embodiment according to the third embodiment of the present invention; and

FIG. 10 shows a transmitting device according to an embodiment of the present invention.

**DETAILED DESCRIPTION OF THE EMBODIMENTS**

In order to make persons of ordinary skill in the art understand and implement the present invention easily, the embodiments of the present invention are described with reference to the accompanying drawings.

In an embodiment, the present invention provides a method for reducing a signal peak value. In this embodiment, a weight of a peak clipping signal is set according to a peak clipping weight factor (the peak clipping weight factor includes, but is not limited to, an encoding mode, a constellation mapping mode, a transmit power, and a receiving quality class) or a frequency domain EVM, thereby controlling the distribution of the peak clipping noise to each sub-carrier.

It is assumed that the signal before peak clipping is x, the signal after peak clipping is $\overline{x}$, and the peak clipping signal is denoted by c. The following equation is true.

$$\overline{x} = x + c$$

and

$$c = \sum_{i=0}^{L-1} a_i e^{j\phi_i} p_i$$

where L denotes a total number of peak points exceeding a threshold of a waveform in the symbol, $a_i$ denotes an amplitude adjustment coefficient of the ith peak point (equal to a difference between an amplitude of x at this point and the threshold value), $\phi_i$ denotes a phase adjustment coefficient that should be opposite to the phase of x at the peak point, and $p_i$ denotes a peak clipping signal after circular shift according to the position of the ith peak point. The weight information of each sub-carrier is denoted by a vector $w$. Then, the corresponding peak clipping signal p can be denoted as $p = IFFT(w)$, where Inverse Fast Fourier Transform (IFFT) indicates inverse fast Fourier transform. The frequency component C of c is considered as follows:

$$C = FFT(c)$$
$$= FFT\left(\sum_{i=0}^{L-1} a_i e^{j\phi_i} p_i\right)$$
$$= \sum_{i=0}^{L-1} a_i e^{j\phi_i} FFT(p_i)$$
$$= \sum_{i=0}^{L-1} a_i e^{j\phi_i} \left[ w \bullet [e^{-j\frac{2\pi k k_i}{N}}] \right]$$
$$= w \bullet \sum_{i=0}^{L-1} a_i e^{j\phi_i} [e^{-j\frac{2\pi k k_i}{N}}]$$

As can be seen from the above equation, the interference introduced by the peak clipping signal to each sub-carrier is directly proportional to the weight set for each sub-carrier when the peak clipping signal is generated. That is, the distribution of the peak clipping noise to each sub-carrier can be controlled by adjusting the weight allocated for each sub-carrier, that is to say, a large weight is allocated to the sub-carrier having good anti-interference capability and a small weight is allocated to the sub-carrier having poor anti-interference capability. In this way, the overall performance of the system is improved.

The method for reducing a signal peak value in the present invention is described below with some exemplary embodiments.

Embodiment 1

In this embodiment, the method for reducing a signal peak value is described with reference to FIG. 2.

In Step 21, a signal is received.

In Step 22, a middle peak clipping signal is generated according to a peak clipping weight factor or a frequency domain EVM.

In Step 23, peak point positions and amplitude phases of the received signal are detected.

In Step 24, a peak clipping signal is generated according to the peak point positions, the amplitude phases, and the middle peak clipping signal.

In Step 25, a peak clipping processing is performed on the received signal by using the peak clipping signal.

In Step 26, the amplitude of the processed signal is detected.

In Step 27, it is determined whether the amplitude is lower than a threshold or whether a number of peak clippings reaches a predetermined number, and if a determination result is true, Step 28 is performed in which the received signal after the peak clipping processing is output and the process ends; otherwise, the process returns to Step 23.

The threshold may be set according to a maximum peak value allowed by the system. For example, the threshold may be set to the maximum peak value or slightly smaller than the maximum peak value, for example, 0.95 times of the maximum peak value. The predetermined time may be an empirical value, for example, any value from 2 to 32.

In Step 23, it is possible to detect only a number of peak points. For example, the number of peak points may be set to any value from 2 to 32. Preferably, in consideration of the predetermined time, the number of peak points detected each time may usually be in inverse proportion to the predetermined number.

In this embodiment, two methods for generating a middle peak clipping signal are described as follows.

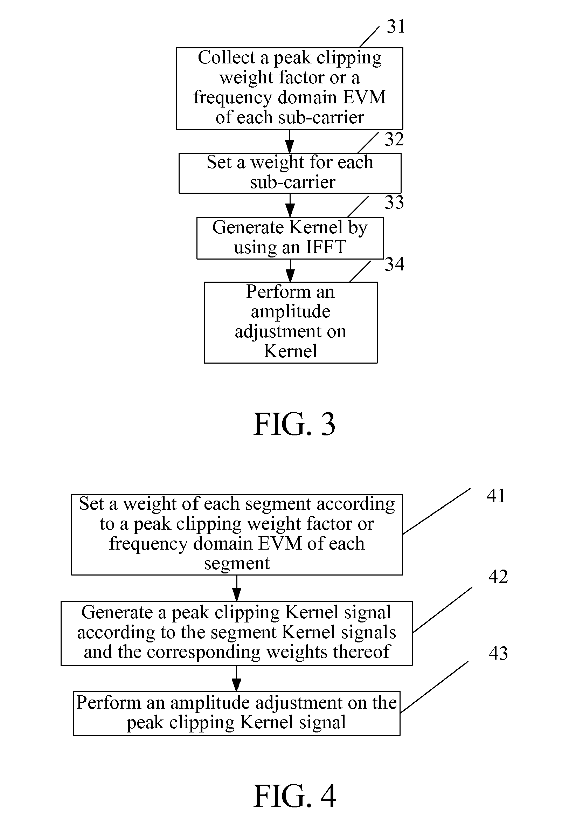

The first method for generating a middle peak clipping signal is described as shown in FIG. 3.

In Step 31, a peak clipping weight factor and a frequency domain EVM of each sub-carrier are collected. The peak clipping weight factor at least includes one of the following factors: an encoding mode, a constellation mapping mode, a degree of data importance, a transmit power, a channel condition, and a receiving quality requirement.

In Step 32, a weight is set for each sub-carrier according to the peak clipping weight factor or the frequency domain EVM.

The weight of each sub-carrier can be obtained based on the following equation:

$$w_j = \sum_{i=1}^{I} w_{j,i} \quad \text{or} \quad w_j = \prod_{i=1}^{I} w_{j,i}$$

where $w_j$ denotes a peak clipping weight of the jth sub-carrier ($w_j \geq 0$); and $w_{j,i}$ denotes a weight of the jth sub-carrier under an ith peak clipping weight factor.

A method for setting a weight of a peak clipping weight factor is described as follows.

The method for setting a weight of a peak clipping weight factor is illustrated by taking the constellation mapping mode as an example. The weight of a peak clipping weight decreases with the rising of an order corresponding to the constellation mapping mode, that is, when the order corresponding to the constellation mapping mode is low, the weight may be set high, and vice versa. For example, the orders corresponding to three constellation mapping modes of QPSK, 16QAM, and 64QAM increase successively, then the corresponding weights may be set to decrease successively, for example, the weights may be set to 0.70, 0.31, and 0.15 respectively.

The method for setting a weight of a peak clipping weight factor is illustrated by taking an encoding rate of the sub-carrier as an example. The weight of a peak clipping weight decreases with the rising of the encoding rate of the sub-carrier, that is, when the encoding rate of the sub-carrier is low, the weight may be set high, and vice versa. For example, the weight for the encoding mode at 1/3 rate can be set higher than that of the encoding mode at 1/2 rate, and the weights of the encoding mode at 1/3 rate and the encoding mode at 1/2 rate may be set to 0.2 and 0.12 respectively.

Other methods for setting a weight of a peak clipping weight factor are similar to the weight setting methods using the encoding mode and the constellation mapping mode.

The minimum processing unit for setting the peak clipping weight may be a sub-carrier or multiple sub-carriers of the same or similar conditions.

The method for setting the weight of each sub-carrier according to a peak clipping weight factor on the sub-carrier is described above. Besides, the weight of each sub-carrier may also be set according to a frequency domain EVM. It is assumed that the frequency domain EVMs of sub-carriers 1 to N are respectively smaller than or equal to $EVM_1$ ..., $EVM_N$. Then, the corresponding weights $w_1$, ..., $w_N$ of the sub-carriers can be computed based on the following equation:

$$\frac{w_1}{EVM_1} \approx \frac{w_2}{EVM_2} \approx \ldots \approx \frac{w_N}{EVM_N}$$

In Step 33, the middle peak clipping signal (also referred to as a Kernel signal) may be generated through an IFFT according to the weight of each sub-carrier.

In Step 34, an amplitude adjustment (normalization) is performed on the middle peak clipping signal, so as to facilitate the amplitude adjustment on the middle peak clipping signal during the peak canceling.

A second method for generating a middle peak clipping signal is described below, as shown in FIG. 4.

In order to generate a peak clipping signal, data sub-carriers in the symbol are first divided into P segments, and all sub-carriers in each segment have only one constellation mapping mode at a certain time (except sub-carriers for transmitting pilots). Corresponding segment Kernel signals are pre-generated for the P segments. The segment Kernel signal is obtained by setting the weight of the data sub-carriers in the segment to the same value, for example, 1, placing the data 0 in other sub-carriers (including the sub-carriers for transmitting pilots), and performing the IFFT and then performing amplitude normalization.

In Step 41, a weight of each segment is set according to a peak clipping weight factor or frequency domain EVM of each segment.

The weight of each segment may be computed based on the following equation:

$$w_j = \sum_{i=1}^{I} w_{j,i} \quad \text{or} \quad w_j = \prod_{i=1}^{I} w_{j,i}$$

where $w_j$ denotes a weight of the j$^{th}$ segment ($w_j \geq 0$); and $w_{j,i}$ denotes a weight of the j$^{th}$ segment under an i$^{th}$ peak clipping weight factor. The method for setting a weight of a peak clipping weight factor can be referred to Step 32.

The weight of each segment may also be obtained based on the following equation:

$$\frac{w_1}{EVM_1} \approx \frac{w_2}{EVM_2} \approx \cdots \approx \frac{w_P}{EVM_P}$$

where $EVM_1$, ..., $EVM_P$ denote upper limits of frequency domain EVMs of the first segment, ...the P$th$ segment; and $w_1$, ..., $w_P$ denote peak clipping weights of the first segment, ...the P$th$ segment.

In Step 42, the segment Kernel signals and the corresponding weights thereof are multiplied so that each segment Kernel signal has its weight, and the Kernel signals with their separate weights are added to obtain a peak clipping Kernel signal.

In Step 43, an amplitude adjustment (normalization) is performed on the peak clipping Kernel signal, so as to facilitate the amplitude adjustment on the peak clipping Kernel signal during the peak canceling.

In this way, the IFFT in the generation of Kernel can be omitted by pre-storing the segment Kernel signals, thereby reducing the complexity of generating the Kernel signals.

Embodiment 2

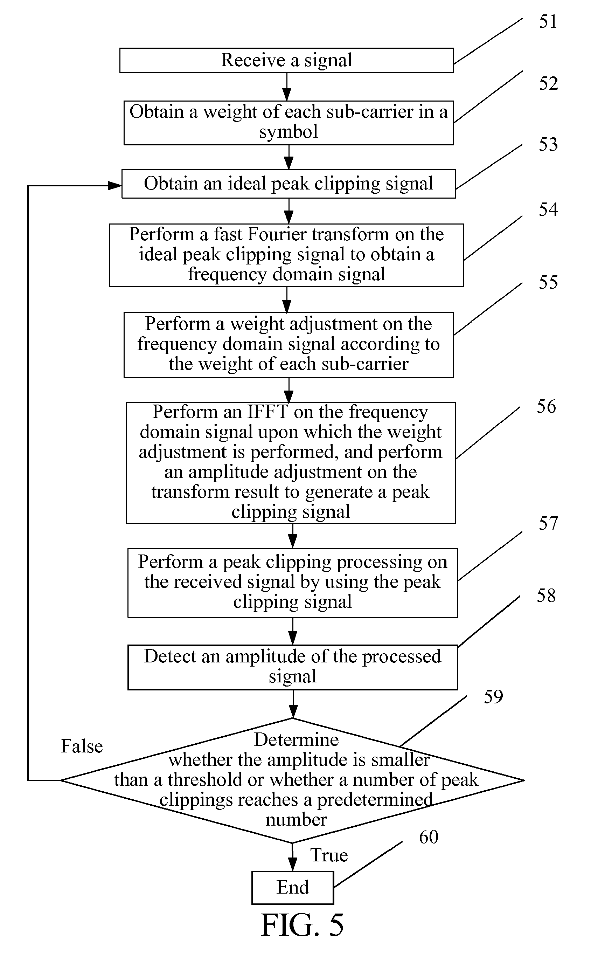

In this embodiment, the method for reducing a signal peak value is described with reference to FIG. 5.

In Step 51, a signal is received.

In Step 52, a weight of each sub-carrier in a symbol is obtained.

The weight of the sub-carrier may be obtained based on the following equation:

$$w_j = \sum_{i=1}^{I} w_{j,i} \quad \text{or} \quad w_j = \prod_{i=1}^{I} w_{j,i}$$

where $w_j$ denotes a weight of the j$^{th}$ sub-carrier ($w_j \geq 0$); and $w_{j,i}$ denotes a weight of the j$^{th}$ sub-carrier under an i$^{th}$ peak clipping weight factor.

The weight of the sub-carrier may also be obtained based on the following equation:

$$\frac{w_1}{EVM_1} \approx \frac{w_2}{EVM_2} \approx \ldots \approx \frac{w_N}{EVM_N}$$

where $EVM_1$, ..., $EVM_N$ denote upper limits of frequency domain EVMs of the sub-carrier 1, ..., the sub-carrier N; and $w_i$, ..., $w_N$ denote peak clipping weights of the sub-carrier 1, ..., the sub-carrier N. The method for setting a weight of a peak clipping weight factor can be referred to that described in Step 32.

In Step 53, an ideal peak clipping signal is obtained. The ideal peak clipping signal is:

$$s(k) = \begin{cases} 0 & \text{If the amplitude of } x(k) \text{ is lower than the threshold} \\ (|x(k)| - \text{Threshold}) \cdot e^{\text{Inverse phase of x(k)}} & \text{If the amplitude of } x(k) \text{ is higher than the threshold} \end{cases}$$

where s(k) denotes the k*th* sampling point of the ideal peak clipping signal, and x(k) denotes the k*th* sampling point of the received signal or the k*th* sampling point of a signal returned by a peak clipping processing module.

In Step 54, a transform from the time domain to the frequency domain (for example, a fast Fourier transform) is performed on the ideal peak clipping signal to obtain a frequency domain signal.

In Step 55, a weight adjustment is performed on the frequency domain signal according to the weight of each sub-carrier.

In Step 56, a transform from the frequency domain to the time domain (for example, an IFFT) is performed on the frequency domain signal upon which the weight adjustment is performed, and an amplitude adjustment is performed on the transformed result to generate a peak clipping signal.

In Step 57, a peak clipping processing is performed on the received signal by using the peak clipping signal.

In Step 58, the amplitude of the processed signal is detected.

In Step 59, it is determined whether the amplitude is lower than a threshold or whether a number of peak clippings reaches a predetermined number, and if the amplitude is lower than the threshold or the number of peak clippings reaches the predetermined number, Step 60 is performed in which the received signal after the peak clipping processing is output and the process ends; otherwise, the process returns to Step 53.

The methods for setting the threshold and the number of peak clippings can be referred to as described in Step 27 in the preceding embodiment.

Embodiment 3

In this embodiment, a device for reducing a signal peak value is described.

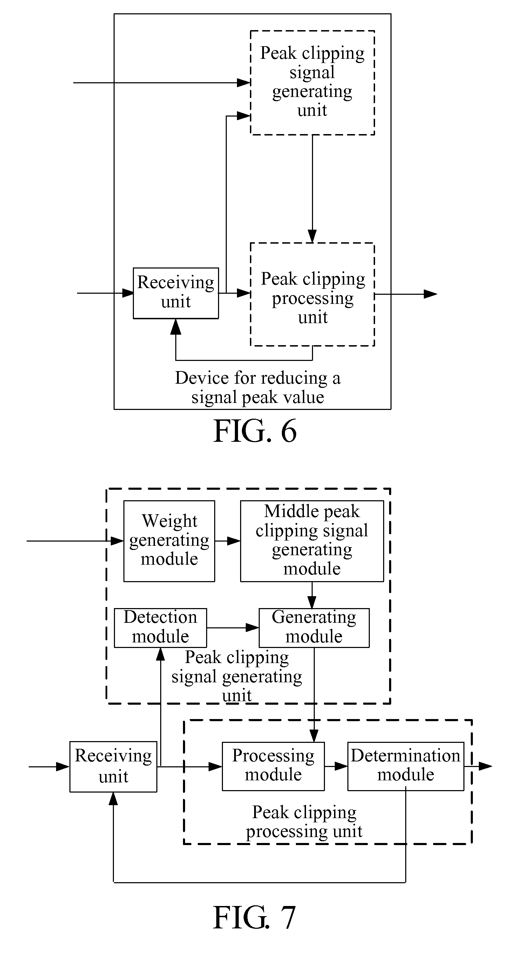

As shown in FIG. 6, the device for reducing a signal peak value includes:

a receiving unit, adapted to receive a signal or a signal returned by a peak clipping processing unit;

a peak clipping signal generating unit, adapted to generate a peak clipping signal according to a peak clipping weight factor or a frequency domain EVM and the received signal of the receiving unit; and

the peak clipping processing unit, adapted to: perform a peak value reduction processing on the received signal according to the peak clipping signal; determine whether an amplitude of the processed signal is lower than a threshold or whether a number of peak clippings reaches a predetermined number; and if the amplitude is lower than the threshold or the number of peak clippings reaches the predetermined number, output the signal and end the process; otherwise, output the signal to the receiving unit.

FIG. 7 is corresponding to the first method for generating a peak clipping signal in the first embodiment. The peak clipping signal generating unit specifically includes: a weight generating module, adapted to generate a weight of each sub-carrier according to a peak clipping weight factor or a frequency domain EVM; a middle peak clipping signal generating module, adapted to generate a middle peak clipping signal according to the weight of each sub-carrier; a detection module, adapted to detect peak point positions and amplitude phases of the received signal or peak point positions and amplitude phases of the signal processed by the processing module; and a generating module, adapted to generate the peak clipping signal according to the peak point positions and the amplitude phases detected by the detection module and the middle peak clipping signal. The peak clipping processing unit specifically includes a processing module, adapted to perform a peak value reduction processing on the signal received by the receiving unit by using the peak clipping signal, and a determination module, adapted to: determine whether an amplitude of the signal processed by the processing module is lower than a threshold or whether a number of peak clippings reaches a predetermined number; and if the amplitude is lower than the threshold or the number of peak clippings reaches the predetermined number, output the signal and end the process; otherwise, output the signal to the receiving unit.

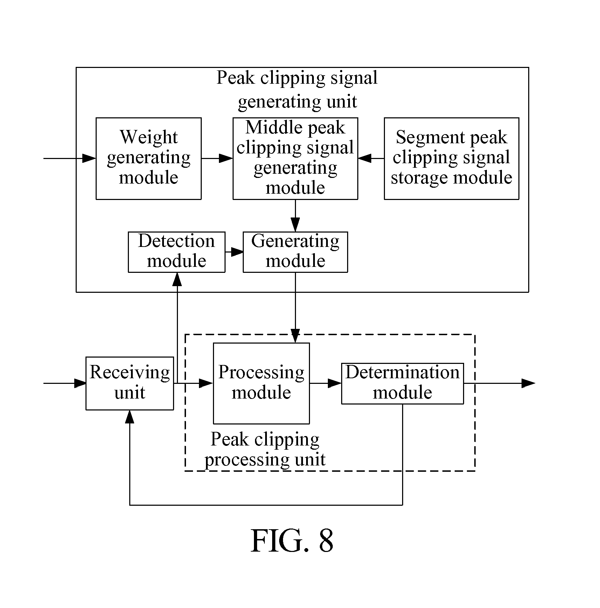

FIG. 8 is corresponding to the second method for generating a peak clipping signal in the first embodiment. The peak clipping signal generating unit specifically includes: a weight generating module, adapted to generate a weight of a segment according to a peak clipping weight factor or a frequency domain EVM; a segment peak clipping signal storage module, adapted to store segment peak clipping signals; a middle peak clipping signal generating module, adapted to generate a middle peak clipping signal according to the weight of each segment and the segment peak clipping signals; a detection module, adapted to detect peak point positions and amplitude phases of the received signal or peak point positions and amplitude phases of the signal processed by the processing module; and a generating module, adapted to generate the peak clipping signal according to the middle peak clipping signal, the peak point positions, and the amplitude phases. The peak clipping processing unit specifically includes a processing module, adapted to perform a peak value reduction processing on the signal received by the receiving unit by using the peak clipping signal, and a determination module, adapted to: determine whether an amplitude of the signal processed by the processing module is lower than a threshold or whether a number of peak clippings reaches a predetermined number; and if the amplitude is lower than the threshold or the number of peak clippings reaches the predetermined number, output the signal and end the process; otherwise, output the signal to the receiving unit.

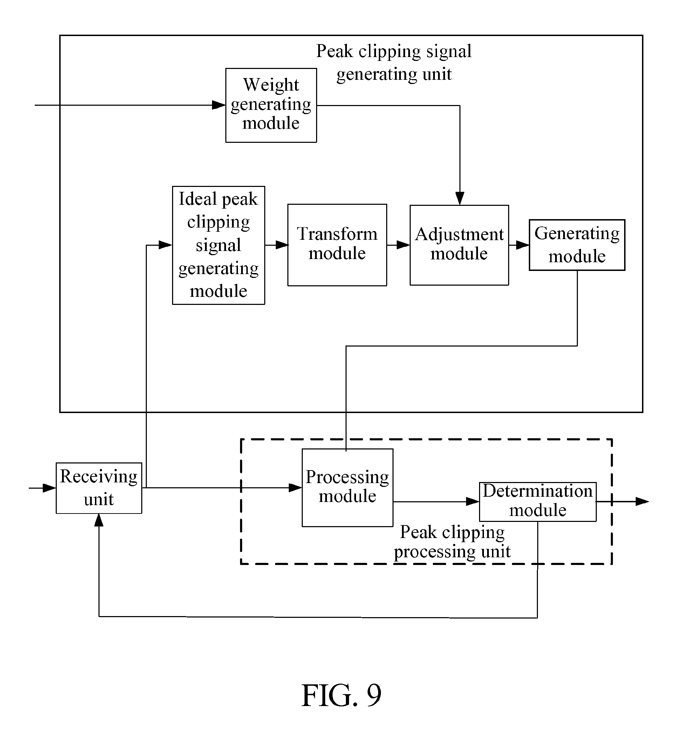

FIG. 9 is corresponding to the second embodiment. The peak clipping signal generating unit specifically includes a weight generating module, adapted to generate a weight of each sub-carrier according to a peak clipping weight factor or a frequency domain EVM; an ideal peak clipping signal generating module, adapted to obtain an ideal peak clipping signal according to the received signal, where the ideal peak clipping signal is obtained by deducting a signal after the peak clipping of the received signal from the received signal; a transform module, adapted to transform the ideal peak clipping signal into a frequency domain signal; an adjustment module, adapted to adjust the frequency domain signal according to the weight generated by the weight generating module; and a generating module, adapted to generate a peak clipping signal according to the frequency domain signal adjusted by the adjustment module. The peak clipping processing unit specifically includes a processing module, adapted to perform a peak value reduction processing on the signal received by the receiving unit by using the peak clipping signal and a determination module, adapted to: determine whether an amplitude of the signal processed by the processing module is lower than a threshold or whether a number of peak clippings reaches a predetermined number; and if the amplitude is lower than the threshold or the number of peak clippings reaches the predetermined number, output the signal and end the process; otherwise, output the signal to the receiving unit.

Embodiment 4

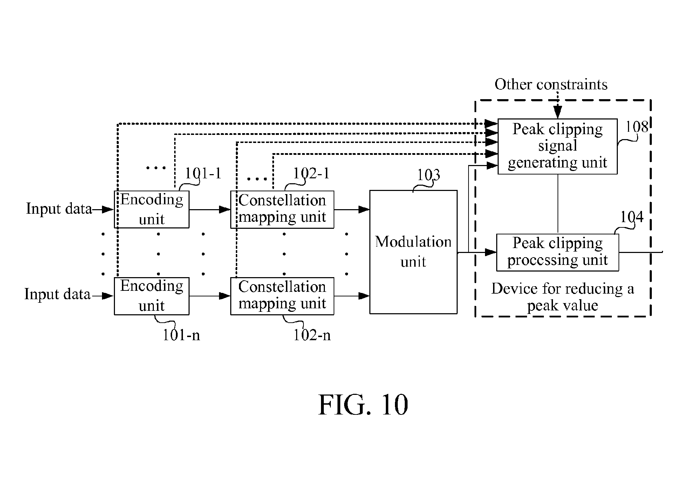

In this embodiment, a transmitting device is described. As shown in FIG. 10, the transmitting device includes: encoding units 101-1~101-n, adapted to encode input data according to an encoding mode; constellation mapping units 102-1~102-n, adapted to map the encoded data according to a constellation mapping mode; a modulation unit 103, adapted to perform an OFDM modulation on the mapped data and transfer the modulated data to the device for reducing a peak value; and a device for reducing a peak value, adapted to perform a peak clipping processing on signals in a symbol according to peak clipping signals having different weights. The device for reducing a peak value includes: a peak clipping signal generating unit 108, adapted to set a weight for each sub-carrier according to encoding and constellation mapping modes of each sub-carrier and other constraints (for example, a degree of data importance, a transmit power, a channel condition, and a receiving quality requirement) or a frequency domain EVM, and generate a peak clipping signal according to the weight of each sub-carrier; and a peak clipping processing unit 104, adapted to perform a peak clipping processing on the sub-carriers in the symbol according to the peak clipping signals generated by the peak clipping signal generating unit 108.

The present invention is also applicable to a combined peak clipping scenario in which one symbol contains multiple OFDM carriers. At this time, a peak clipping weight factor and a frequency domain EVM of each sub-carrier in each OFDM carrier need to be collected. The peak clipping weight factor includes one or more of the factors such as an encoding mode, a constellation mapping mode, a degree of data importance, a transmit power, a channel condition, and a receiving quality requirements. Afterwards, a weight is set for each sub-carrier in each carrier according to the peak clipping weight factor or the frequency domain EVM. The setting method can be referred to as described in Step 32. Then, a combined peak clipping signal, that is, a middle peak clipping signal, of the symbol containing the multiple OFDM carriers is generated according to the weight of each sub-carrier in each OFDM carrier. The generating method is as follows.

If the sub-carriers in each of the multiple OFDM carriers are orthogonal to each other, a multiple-point IFFT transform may be utilized to transform the weight of each sub-carrier in each OFDM carrier into a middle peak clipping signal (also referred to as a Kernel signal). If the sub-carriers in each of the multiple OFDM carriers are not orthogonal to one another, a plurality of multiple-point IFFT transforms may be utilized to transform the weight of each sub-carrier in each OFDM carrier into multiple quasi middle peak clipping signals, then a middle peak clipping signal (also referred to as a Kernel signal) is generated by using the quasi middle peak clipping signals in combination with a numerically controlled oscillator (NCO). Finally, an amplitude adjustment (normalization) is performed on the middle peak clipping signal, so as to facilitate the amplitude adjustment on the middle peak clipping signal during the peak canceling.

It should be noted that, in the process for reducing a signal peak value in the above embodiment, there is a substitution approach for re-computing the middle peak clipping signal for every symbol. The middle peak clipping signal may also be set according to a variation period of the peak clipping weight factor of each sub-carrier. For example, one middle peak clipping signal may be generated during per frame. Besides, when the conditions of the sub-carriers are substantially the same at different time, one peak clipping Kernel signal may also be pre-stored, so as to avoid repeated computation of the peak clipping signal and save hardware expense.

In the embodiments of the present invention, a weight of a peak clipping signal is set according to a peak clipping weight factor (the peak clipping weight factor includes, but is not limited to, an encoding mode, a constellation mapping mode, a transmit power, and a receiving quality class) or a frequency domain EVM, that is, a large weight is allocated to the sub-carrier having good anti-interference capability and a small weight is allocated to the sub-carrier having poor anti-interference capability, thereby improving the overall performance of the system.

Although the present invention is described through the embodiments, it will be apparent to persons of ordinary skill in the art that various modifications and variations can be made to the present invention without departing from the essence of the invention. The scope of the present invention shall be defined by the following claims.

## Claims

**1.** A method for reducing a signal peak value, comprising:

receiving a signal; and
performing peak clipping on the received signal by using a peak clipping signal, wherein the peak clipping signal is formed according to a peak clipping weight factor and the received signal, or according to a frequency domain error vector magnitude EVM and the received signal.

**2.** The method for reducing a signal peak value according to claim 1, wherein the peak clipping signal is formed according to a peak clipping weight factor and the received signal, or according to a frequency domain EVM and the received signal comprises:

forming a middle peak clipping signal, according to the peak clipping weight factor or the frequency domain EVM;
detecting peak point positions and amplitude phases of the received signal; and
forming the peak clipping signal according to the peak point positions, amplitude phases of the received signal, and the middle peak clipping signal.

**3.** The method for reducing a signal peak value according to claim 2, after performing peak clipping on the received signal by using a peak clipping signal, the method further comprises:

detecting an amplitude of the peak clipped signal;
determining whether the amplitude is lower than a threshold or whether a number of peak clippings reaches a predetermined number; and
if the amplitude is lower than the threshold or the number of peak clipping reaches the predetermined number, the peak clipping processing ends; or
if the amplitude is not lower than the threshold or the number of peak clipping does not reach the predetermined number, go on to detect the peak point positions and amplitude phases of the received signal.

**4.** The method for reducing a signal peak value according to claim 2, wherein the peak clipping signal is formed according to a peak clipping weight factor and the received signal, or according to a frequency domain EVM and the received signal includes:

obtaining the weight of each sub-carrier based on the equation:

$$w_j = \sum_{i=1}^{I} w_{j,i} \quad \text{or} \quad w_j = \prod_{i=1}^{I} w_{j,i}$$

wherein $w_j$ is a peak clipping weight of the jth sub-carrier and $w_j \geq 0$; $w_{j,i}$ is a weight of the jth sub-carrier under an ith peak clipping weight factor; or
obtaining the weight of each sub-carrier based on the equation:

$$\frac{w_1}{EVM_1} \approx \frac{w_2}{EVM_2} \approx \dots \approx \frac{w_N}{EVM_N}$$

wherein $EVM_1$ ..., $EVM_N$ are the upper limits of the frequency domain EVM of the sub-carrier 1...sub-carrier N; $w_1$, ..., $w_N$ are the corresponding weights of the sub-carrier 1... sub-carrier N;
and
generating the middle peak clipping signal through a frequency-time domain transform according to the weight of each sub-carrier.

**5.** The method for reducing a signal peak value according to claim 2, wherein the peak clipping signal is formed according to a peak clipping weight factor and the received signal, or according to a frequency domain EVM and the received signal includes:

obtaining the weight of each segment based on the equation:

$$w_j = \sum_{i=1}^{I} w_{j,i} \quad \text{or} \quad w_j = \prod_{i=1}^{I} w_{j,i}$$

wherein $w_j$ is a peak clipping weight of the jth segment and $w_j \geq 0$; $w_{j,i}$ is a weight of the jth segment under an ith peak clipping weight factor; or
obtaining the weight of each segment based on the equation:

$$\frac{w_1}{EVM_1} \approx \frac{w_2}{EVM_2} \approx \dots \approx \frac{w_N}{EVM_N}$$

wherein $EVM_1$ ..., $EVM_N$ are the upper limits of the frequency domain EVM of the sub-carrier 1...segment. N; $w_1$, ..., $w_N$ are the corresponding weights of the sub-carrier 1... segment N;
and
generating the middle peak clipping signal through a frequency-time domain transform according to the weight of each segment.

**6.** The method for reducing a signal peak value according to claim 2, when one symbol contains multiple OFDM carriers, said forming a middle peak clipping signal, according to the peak clipping weight factor or the frequency domain EVM comprises:

collecting peak clipping weight factors and frequency domain EVM of each sub-carrier in each OFDM carrier; setting a weight for each sub-carrier in each carrier, according to the peak clipping weight factor or the frequency domain EVM; and
if the sub-carriers in each of the multiple OFDM carriers are orthogonal to each other, utilizing a multiple-point IFFT transform to transform the weight of each sub-carrier in each OFDM carrier into a middle peak clipping signal; or
if the sub-carriers in each of the multiple OFDM carriers are not orthogonal to one another, utilizing a plurality of multiple-point IFFT transforms to transform the weight of each sub-carrier in each OFDM carrier into multiple quasi middle peak clipping signals, then generating a middle peak clipping signal, by using the quasi middle peak clipping signals in combination with a numerically controlled oscillator NCO.

**7.** The method for reducing a signal peak value according to claim 1, wherein said performing peak clipping on the received signal by using a peak clipping signal comprises:

obtaining the weight of each sub-carrier based on the equation:

$$w_j = \sum_{i=1}^{I} w_{j,i} \quad \text{or} \quad w_j = \prod_{i=1}^{I} w_{j,i}$$

wherein $w_j$ is a peak clipping weight of the j$^{th}$ sub-carrier and $w_j \geq 0$; $w_{j,i}$ is a weight of the j$^{th}$ sub-carrier under an i$^{th}$ peak clipping weight factor; or
obtaining the weight of each sub-carrier based on the equation:

$$\frac{w_1}{EVM_1} \approx \frac{w_2}{EVM_2} \approx \dots \approx \frac{w_N}{EVM_N}$$

wherein $EVM_1$ ..., $EVM_N$ are the upper limits of the frequency domain EVM of the sub-carrier 1...sub-carrier N; $w_1$, ..., $w_N$ are the corresponding weights of the sub-carrier 1... sub-carrier N;
obtaining an ideal peak clipping signal;
transforming the ideal peak clipping signal to a frequency domain signal by time-frequency domain transforming;
adjusting the weight of frequency domain signal according to the weight of each sub-carrier;
performing frequency-time domain transforming on the frequency domain signal which the weight adjustment is performed;
generating a peak clipping signal by an amplitude adjustment on the transformed result; and
processing a peak clipping on the received signal by using the peak clipping signal.

**8.** The method for reducing a signal peak value according to claim 7, wherein, after processing a peak clipping on the received signal by using the peak clipping signal, the method further comprises:

detecting an amplitude of the peak clipped signal;
determining whether the amplitude is lower than a threshold or whether a number of peak clippings reaches a predetermined number; and
if the amplitude is lower than the threshold or the number of peak clipping reaches the predetermined number, the peak clipping processing ends; or
if the amplitude is not lower than the threshold or the number of peak clipping does not reach the predetermined number, go on to obtain an ideal peak clipping signal.

**9.** The method for reducing a signal peak value according to any of claim in claim 1 to claim 8, wherein the peak clipping weight factor comprises at least one of the factors: an encoding mode, a constellation mapping mode, a transmit power, and a receiving quality class.

**10.** A device for reducing a signal peak value, comprising a receiving unit, a peak clipping signal generating unit, and a peak clipping processing unit, wherein,

the receiving unit comprises a first receiving module adapted to receive an upper level signal and output the received signal to the peak clipping signal generating unit and the peak clipping processing unit;
the peak clipping signal generating unit is adapted to generate a peak clipping signal according to a peak clipping weight factor and the signal received by the receiving unit or according to a frequency domain EVM and the received signal; and
the peak clipping processing unit comprises a processing module adapted to perform a peak value reduction processing on the received signal according to the peak clipping signal.

11. The device for reducing a signal peak value according to claim 10, wherein, the peak clipping signal generating unit comprises:

a weight generating module, adapted to generate a weight of each sub-carrier according to a peak clipping weight factor or a frequency domain EVM;

a middle peak clipping signal generating module, adapted to generate a middle peak clipping signal according to the weight of each sub-carrier;

a detection module, adapted to detect peak point positions and amplitude phases of the received signal or peak point positions and amplitude phases of the signal processed by the processing module; and

a generating module, adapted to generate the peak clipping signal according to the peak point positions and the amplitude phases detected by the detection module and the middle peak clipping signal.

12. The device for reducing a signal peak value according to claim 10, wherein, the peak clipping signal generating unit comprises:

a weight generating module, adapted to generate a weight of a segment according to a peak clipping weight factor or a frequency domain EVM;

a segment peak clipping signal storage module, adapted to store segment peak clipping signals;

a middle peak clipping signal generating module, adapted to generate a middle peak clipping signal according to the weight of each segment and the segment peak clipping signals;

a detection module, adapted to detect peak point positions and amplitude phases of the received signal or peak point positions and amplitude phases of the signal processed by the processing module; and

a generating module, adapted to generate the peak clipping signal according to the middle peak clipping signal, the peak point positions, and the amplitude phases.

13. The device for reducing a signal peak value according to claim 11 or 12, wherein the peak clipping processing unit comprises:

a determination module, adapted to: determine whether an amplitude of the signal processed by the processing module is lower than a threshold or whether a number of peak clippings reaches a predetermined number; and if the amplitude is lower than the threshold or the number of peak clippings reaches the predetermined number, output the signal and end the process; otherwise, output the signal to the receiving unitwherein, the receiving unit further comprises: a second receiving module, adapted to receive the signals processed by the peak clipping processing unit, and send the received signal to the detecting module and the processing module in the peak clipping processing unit.

14. The device for reducing a signal peak value according to claim 10, wherein the peak clipping signal generating unit comprises:

a weight generating module, adapted to generate a weight of each sub-carrier according to a peak clipping weight factor or a frequency domain EVM;

an ideal peak clipping signal generating module, adapted to obtain an ideal peak clipping signal according to the received signal, wherein the ideal peak clipping signal is obtained by deducting a signal after the peak clipping of the received signal from the received signal;

a transform module, adapted to transform the ideal peak clipping signal into a frequency domain signal;

an adjustment module, adapted to adjust the frequency domain signal according to the weight generated by the weight generating module; and

a generating module, adapted to generate a peak clipping signal according to the frequency domain signal adjusted by the adjustment module.

15. The device for reducing a signal peak value according to claim 14, wherein the peak clipping processing unit comprises:

a determination module, adapted to: determine whether an amplitude of the signal processed by the processing module is lower than a threshold or whether a number of peak clippings reaches a predetermined number; and if the amplitude is lower than the threshold or the number of peak clippings reaches the predetermined number, output the signal and end the process; otherwise, output the signal to the receiving unit;

wherein, the receiving unit further comprises: a second receiving module, adapted to receive the signals processed by the peak clipping processing unit, and send the received signal to the ideal peak clipping signal generating module and the processing module in the peak clipping processing unit.

16. A transmitting device, comprising an encoding unit, a constellation mapping unit, and a modulation unit,

the encoding unit being adapted to encode data to be transmitted;

the constellation mapping unit being adapted to perform a constellation mapping on the data encoded by the encoding unit;

the modulation unit being adapted to modulate the data of the constellation mapping unit to a corresponding sub-carrier;

**characterized in that**, the transmitting device further comprises a device for reducing a peak value, wherein the device for reducing a signal peak value comprises:

a peak clipping signal generating unit being adapted to generate a peak clipping signal according to a peak clipping weight factor or a frequency domain EVM; and

a peak clipping processing unit being adapted to perform a peak value reduction processing on the received signal according to the peak clipping signal.

FIG. 1

FIG. 2

31

Collect a peak clipping
weight factor or a
frequency domain EVM
of each sub-carrier

32

Set a weight for each
sub-carrier

33

Generate Kernel by
using an IFFT

34

Perform an
amplitude
adjustment on
Kernel

FIG. 3

41

Set a weight of each segment according
to a peak clipping weight factor or
frequency domain EVM of each
segment

42

Generate a peak clipping Kernel signal
according to the segment Kernel signals
and the corresponding weights thereof

43

Perform an amplitude adjustment on the
peak clipping Kernel signal

FIG. 4

51

Receive a signal

52

Obtain a weight of each sub-carrier in a
symbol

53

Obtain an ideal peak clipping signal

54

Perform a fast Fourier transform on the
ideal peak clipping signal to obtain a
frequency domain signal

55

Perform a weight adjustment on the
frequency domain signal according to
the weight of each sub-carrier

56

Perform an IFFT on the frequency
domain signal upon which the weight
adjustment is performed, and perform
an amplitude adjustment on the
transform result to generate a peak
clipping signal

57

Perform a peak clipping processing on
the received signal by using the peak
clipping signal

58

Detect an amplitude of the processed
signal

59

False

Determine
whether the amplitude is smaller
than a threshold or whether a number of peak
clippings reaches a predetermined
number

True

60

End

FIG. 5

Peak clipping
signal
generating
unit

Receiving
unit

Peak clipping
processing
unit

Device for reducing a
signal peak value

## FIG. 6

Weight
generating
module

Middle peak
clipping signal
generating
module

Detection
module

Generating
module

Peak clipping
signal generating
unit

Receiving
unit

Processing
module

Determination
module

Peak clipping
processing unit

## FIG. 7

Peak clipping signal
generating unit

| Weight generating module | Middle peak clipping signal generating module | Segment peak clipping signal storage module |

Detection module → Generating module

Receiving unit → Processing module → Determination module

Peak clipping
processing unit

FIG. 8

Peak clipping signal
generating unit

Weight
generating
module

Ideal peak
clipping
signal
generating
module

Transform
module

Adjustment
module

Generating
module

Receiving
unit

Processing
module

Determination
module

Peak clipping
processing unit

FIG. 9

FIG. 10

# INTERNATIONAL SEARCH REPORT

| International application No. |
| --- |
| PCT/CN2008/000083 |

**A. CLASSIFICATION OF SUBJECT MATTER**

H04B 7/005 (2006.01) i

According to International Patent Classification (IPC) or to both national classification and IPC

**B. FIELDS SEARCHED**

Minimum documentation searched (classification system followed by classification symbols)

IPC: H04B7/-

Documentation searched other than minimum documentation to the extent that such documents are included in the fields searched

Electronic data base consulted during the international search (name of data base and, where practicable, search terms used)

CPRS; CNKI; WPI; EPODOC; PAJ: ELIMINATE, DECREASE, LOWER, REDUCE, DEGRADE, PEAK, WEIGHTING, FREQUENCY DOMAIN, VECTOR, ENCODE, CODE, MAP, MODULATE, SUB-CARRIER, SUBCARRIER

**C. DOCUMENTS CONSIDERED TO BE RELEVANT**

| Category* | Citation of document, with indication, where appropriate, of the relevant passages | Relevant to claim No. |
| --- | --- | --- |
| X | CN1703037A (NTT DOCOMO INC) 30 Nov. 2005 (30.11.2005) Description page 1 lines 13-27, page 8 lines 14-22, page 11 line 15-page 13 line 9 | 1,9,10 |
| A | The whole document | 2-8,11-16 |
| A | CN1720668A (NEC CORP) 11 Jan. 2006(11.01.2006) The whole document | 1-16 |
| A | CN1694444A (NTT DOCOMO INC) 09 Nov. 2005 (09.11.2005) The whole document | 1-16 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 08 Apr. 2008(08.04.2008) | **24 Apr. 2008 (24.04.2008)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer LIU,Shiru Telephone No. (86-10)62411317 |
| --- | --- |

Form PCT/ISA/210 (second sheet) (April 2007)

**EP 2 109 227 A1**

## INTERNATIONAL SEARCH REPORT
Information on patent family members

| International application No. |
| --- |
| PCT/CN2008/000083 |

| Patent Documents referred in the Report | Publication Date | Patent Family | Publication Date |
| --- | --- | --- | --- |
| CN1703037A | 30.11.2005 | EP1601149A2 | 30.11.2005 |
|  |  | JP2005341055A | 08.12.2005 |
|  |  | US2005265479A1 | 01.12.2005 |
| CN1720668A | 11.01.2006 | WO2004051876A1 | 17.06.2004 |
|  |  | JP2004186900A | 02.07.2004 |
|  |  | AU2003284518A1 | 23.06.2004 |
|  |  | EP1569350A1 | 31.08.2005 |
| CN1694444A | 09.11.2005 | EP1596551A1 | 16.11.2005 |
|  |  | JP2005322998A | 17.11.2005 |
|  |  | US2005259565A1 | 24.11.2005 |

Form PCT/ISA/210 (patent family annex) (April 2007)